# EUROPEAN PATENT SPECIFICATION

(11) **EP 3 770 063 B1**
(45) Date of publication and mention of the grant of the patent: **05.04.2023**
(21) Application number: 19400018.8
(22) Date of filing: 25.07.2019
(51) Int. Cl.: B64C 11/00, B64C 29/00, B64C 39/02

(54) **A MULTIROTOR AIRCRAFT WITH DUCTED ROTORS**
MEHRROTORFLUGZEUG MIT MANTELROTOREN
AÉRONEF MULTIROTOR AYANT DES ROTORS CARÉNÉS

(43) Date of publication of application: 27.01.2021
(73) Proprietor: AIRBUS HELICOPTERS DEUTSCHLAND GmbH, 86609 Donauwörth (DE)
(72) Inventor: Ghomrassi, Mohamed-Mezri, 86609 Donauwörth (DE); Pellerin, Samuel, 86609 Donauwörth (DE); LE Cadet, Yann, 86707 Westendorf (DE)
(74) Representative: GPI Brevets

(56) References cited:
- WO-A1-2016/132040
- CN-A- 108 263 600
- KR-A- 20170 125 635
- US-A- 3 820 746
- US-A1- 2016 229 532

## Description

The present embodiments are related to a multirotor aircraft with at least one thrust producing unit, and, more particularly, to a multirotor aircraft with at least one thrust producing unit that comprises at least one main rotor assembly and a plurality of secondary rotor assemblies. The present embodiments are further related to a thrust producing unit for an aircraft that comprises such at least one main rotor assembly and a plurality of secondary rotor assemblies.

Most solutions for urban air mobility (UAM) involve vertical take-off and landing (VTOL) aircrafts with a plurality of thrust producing units. These VTOL aircrafts are often embodied by multirotor aircrafts. These multirotor aircrafts, and, in particular, the thrust producing units that move these multirotor aircrafts should provide for efficient energy consumption.

Conventional multirotor aircrafts are equipped with two or more thrust producing units that are provided for producing thrust in a predetermined direction during operation of the multirotor aircraft. In general, each thrust producing unit includes one or more rotors or propellers and is, usually, designed for specific flight conditions.

By way of example, a thrust producing unit that is designed as an airplane propeller operates at its optimum in cruise conditions, whereas a thrust producing unit that is designed as propeller of a compound helicopter is rather optimized for hover or forward flight conditions, while a thrust producing unit that implements e g. a so-called Fenestron^{®} tail rotor is particularly designed for hover conditions.

In all of these examples, the respective thrust producing unit is optimized for operation in axial air flow conditions, i.e. in an air flow direction that is oriented at least approximately along a rotor axis respectively a rotation axis of the given one or more rotors or propellers and, therefore, referred to as an axial air flow direction. If, however, the respective thrust producing unit is operated in transversal air flow conditions, i.e. in an air flow direction that is oriented transverse to the rotor axis of the given one or more rotors or propellers and, therefore, referred to as a non-axial air flow direction, a respective efficiency of the thrust producing unit usually decreases considerably.

By way of example, the usual flight path of a multirotor aircraft with two or more thrust producing units consists in taking off vertically, performing forward flight to a given destination, and then landing vertically. The vertical take-off and landing phases may e.g. be combined with respective hovering phases.

During the vertical take-off phase, for instance, the thrust producing units of the multirotor aircraft will be subjected to axial air flow conditions. Then, after the vertical take-off and/or a respective hovering phase, the multirotor aircraft needs to be accelerated in a predetermined forward flight direction to perform forward flight to the given destination.

Required propulsion forces for the acceleration and for the compensation of occurring drag forces during the forward flight are usually generated by tilting respectively inclining the thrust producing units from a vertical take-off position into a forward flight position.

In other words, respective thrust vectors generated by the thrust producing units are inclined in a predetermined direction by rotating the thrust producing units accordingly, so that the multirotor aircraft gains velocity and leaves a previous vertical take-off or hovering phase such that is converts to forward flight, wherein the thrust producing units are subjected to transversal air flow conditions.

Upon arrival at the given destination, the thrust producing units are usually tilted back from the forward flight position into the vertical take-off position. Thus, landing at the given destination can be performed.

However, the provision of tiltable thrust producing units results in high system complexity and system weight due to a need of controlling and surveillance of required active actuation means. In particular, already the provision of such required active actuation means usually significant increases in the underlying system complexity and weight, so that respective maintenance costs of such multirotor aircrafts are generally very high, thus, limiting usage of such multirotor aircrafts at least mainly to military or governmental applications. Therefore, current multirotor aircrafts are predominantly provided with fixed attachment units for rigidly attaching respective thrust producing units to corresponding multirotor aircraft airframes.

In case of such a fixed attachment unit that rigidly attaches a respective thrust producing unit to an airframe of a given multirotor aircraft, tilting of one or more of the thrust producing units corresponds to inclining the complete airframe, i.e. inclining of the entire multirotor aircraft. However, in particular for recently appearing multirotor aircraft concepts related to fast flying and/or passenger carrying multirotor aircrafts, such an inclining of the entire multirotor aircraft implies multiple technical problems and disadvantages, as described hereinafter.

More specifically, when using such a fixed attachment unit with a given multirotor aircraft, the entire multirotor aircraft must be inclined during forward flight so that a respectively required propulsive force can be generated. However, the faster the given multirotor aircraft is intended to fly, the higher an underlying degree of inclination must be chosen, in particular for fast forward flight. Unfortunately, a higher degree of inclination automatically leads to higher drag which, in turn, limits an obtainable performance of the given multirotor aircraft.

Furthermore, with respect to passenger comfort, a typical maximum inclination angle for cabin inclination with respect to the passenger's acceptance and comfort ranges between +/-5°. However, when using a fixed attachment unit with a given multirotor aircraft, this typical maximum inclination angle would limit an achievable magnitude of a maximum achievable propulsive force, which is the horizontal component of a respectively generated thrust vector at a given inclination angle, thus, significantly limiting an overall achievable performance of the given multirotor aircraft. Furthermore, the fixed attachment unit will directly propagate vibration of the thrust producing units into a respective passenger cabin of the given multirotor aircraft, which will further degrade passenger comfort.

Moreover, when using a fixed attachment unit with a given multirotor aircraft, the latter requires additional manoeuvring engine overpower for enabling manoeuvring flight. This overpower must be defined according to weight and inertia of the entire multirotor aircraft. In other words, comparatively high manoeuvring overpowers must be designed according to a respective total mass of the given multirotor aircraft.

Finally, when using a fixed attachment unit with a given multirotor aircraft, the entire multirotor aircraft must be moved or rotated to compensate any influence of gust during operation. However, this will lead to a comparatively high power consumption.

As a consequence, a major disadvantage of all above-described conventional multirotor aircrafts consists in that they are not readily suitable for being used in currently emerging air transportation concepts. More specifically, such currently emerging air transportation concepts relate in particular to transportation of passengers, but also of products and goods, in urban areas and, more particularly, in big cities and/or so-called mega-cities. Thus, multirotor aircrafts that are intended for use in such currently emerging transportation concepts underlie particularly strict applicable authority regulations, certification requirements and safety demands.

More specifically, a primary mission of a multirotor aircraft that is intended for use in such currently emerging transportation concepts is the air transport of a comparatively small number of passengers, e. g. up to four, or a comparative volume of products and goods, over a comparatively short range.

Furthermore, the multirotor aircraft that is intended for use in such currently emerging transportation concepts should be powered electrically, at least for reduction of environmental pollution and noise generation. However, for electrical flight only limited energy is available due to an underlying energy density of respectively provided electrical accumulators as electrical power sources. As a consequence, the comparatively short range is generally limited to a maximum of half an hour of flight time.

Furthermore, during a typical transportation flight, a respective hovering time of the multirotor aircraft that is intended for use in such currently emerging transportation concepts will usually be very short and most of the time the multirotor aircraft will be performing forward flight. Therefore, a high efficiency is required for both, hovering and forward flight. In addition, a suitable autorotation capability would significantly increase the safety of a multirotor aircraft that is intended for use in such currently emerging transportation concepts. However, such a suitable autorotation capability is very limited respectively impossible for all above-described conventional multirotor aircrafts.

Mainly, two solutions are presented by manufacturers to increase the efficiency of the forward flight. The first solution involves the use of additional lifting elements such as wings. In forward flight, wings generate lift after reaching a minimum forward flight speed. The transition phase between the hovering phase and reaching the minimum forward flight speed is inefficient and consumes more energy than pure-hover flight.

The second solution involves tilting the lifting elements up to a 90° angle compared to the hovering phase despite the above-mentioned drawbacks, whereby tilting the lifting elements may involve tilting the propellers as well as the wings. In some concepts the interaction between wings and rotors lead to aerodynamic drawbacks. As an example, rotors placed in front of wings prevent a clean aerodynamic air flow. As another example, the tilting mechanism needs to be redundant and thereby consumes additional electrical power which leads to a weight penalty.

Ducted rotors are a common solution in several VTOL aircrafts. Ducted rotors are very efficient in hover, and the geometry of ducts generate additional lift. Ducted rotors also prevent interaction between rotating blades and reduces the level of noise.

In general, ducts or shrouds are defined by enclosed, annular surfaces that are arranged around associated rotors or propellers in order to improve respective aerodynamics and performances of the associated rotors or propellers. In addition, such ducts or shrouds are provided for protecting respective rotor or propeller blades of the associated rotors or propellers from undesired impacts during flight, such as e.g. bird strikes, as well as on ground or during hovering in very low distance to ground, where close obstacles on ground could be hit. Accordingly, such ducts or shrouds are usually confronted with the following problems: robustness, damage tolerance, weight, stiffness, strength and stability, integration, noise reduction, as well as production costs and manufacturability.

Conventional ducts or shrouds generally cope with one or more of the above-described problems. However, there is currently no concept available that is suitable to cope with all of the above-described problems. Furthermore, an important drawback of ducts is the high drag in forward flight.

Tilting the ducts is the most common way to overcome the issue associated with high drag of ducts in forward flight. However, as mentioned above, the tilting mechanism is often heavy and the transition from vertical to horizontal flight consumes additional power to avoid the phenomenon of a stall.

Document WO 2016/132040 A1 describes an Aerodyne that includes a supporting structure, to which are connected: - at least one supporting axial blower, attached relative to the supporting structure; - at least one main engine for driving the supporting blower; - at least three attitude blowers for controlling the attitude of the Aerodyne in terms of roll and pitch, each attitude blower having an electrical motor and being attached, respectively, to one of the elongate arms that are distributed in a laterally, outwardly projecting manner around the supporting structure, to which each arm is connected by an inner end portion, the axis of rotation of each attitude blower being attached relative to the supporting structure, and all the attitude blowers being located outside the space centrally occupied by the supporting blower.

However, the at least three attitude blowers merely control the attitude of the Aerodyne in terms of roll and pitch. They have no influence on the tilting of the main rotor.

Document WO 2001/30652 A1 describes an aircraft that comprises a central cabin, which is located in the center of a circular wing. Several pivotal electric drive units are arranged in a gap between the central cabin and the circular ring. In hover flight, the drive units are pivoted to generate a lift. When the aircraft goes into cruise flight, the drive units are pivoted to generate a forward thrust. Attitude and movements of the aircraft can be controlled by individual or common adjustment of the thrust and pivot angle of the drive units.

However, all drive units have the same power and are controlled independently of each other. There is no control of the drive units in terms of pitch, roll, and yaw. Furthermore, the aircraft has a single circular ring around the drive units.

Document US 2016/0229532 A1 describes an engine system with a multi-gas-generator, tip-turbine driven lift fan with pressurized air circulation control for use on vertical and short-take-off and landing (V/STOL) aircraft. Gas generators located around the periphery of the fan drive the fan through action on a fan blade-tip turbine or provide compressed gas to circulation control devices.

In summary, VTOL aircrafts play an important role in the development of aviation transportation markets in an urban environment. Zero-emission, a low noise level, an efficient energy consumption, and a high safety level are all important aspects that these VTOL aircrafts need to address.

Several VTOL aircrafts that target the aviation transportation market in an urban environment have been presented. These VTOL aircrafts trade-off compactness, redundancy of lifting units, hover efficiency, and cruise efficiency. Each improvement of one aspect is done at the expense of another one.

It is, therefore, an objective to provide a new multirotor aircraft that is safe and reliable and suitable for transportation of passengers in urban areas. The new multirotor aircraft should be adapted for vertical take-off and landing and feature an aerodynamically efficient arrangement of thrust producing units.

This objective is solved by a multirotor aircraft that is adapted for vertical take-off and landing, the multirotor aircraft comprising the features of claim 1. More specifically, the multirotor aircraft that is adapted for vertical take-off and landing comprises a fuselage and at least one thrust producing unit that is connected to the fuselage via an associated structural support and pivotable around the associated structural support relative to the fuselage. The at least one thrust producing unit comprises at least one main rotor assembly, a plurality of secondary rotor assemblies, and a shrouding that forms a main air duct and a plurality of secondary air ducts, the main air duct being provided for interacting with the at least one main rotor assembly and the plurality of secondary air ducts being provided for interacting with the plurality of secondary rotor assemblies, and wherein the plurality of secondary air ducts is peripherally arranged around the main air duct in an arc-shaped layout. The at least one main rotor assembly and the plurality of secondary rotor assemblies are operable independent of each other. The plurality of secondary rotor assemblies is configured to implement a tilting mechanism adapted for pivoting the at least one thrust producing unit around the associated structural support relative to the fuselage. At least a first portion of the plurality of secondary rotor assemblies is operable independent of a second portion of the plurality of secondary rotor assemblies to implement the tilting mechanism.

It should be noted that the term "shrouding" should be understood as encompassing simultaneously the terms "duct" and "shroud". In other words, in the context of the present embodiments, the term "shrouding" refers interchangeably to a duct or a shroud.

The multirotor aircraft may have a thrust producing unit that includes a tiltable, ducted rotor with integrated jet fans. The multirotor aircraft may have two, three, four, five, six, or more of these thrust producing units.

Each thrust producing unit may be linked to the fuselage by wings that may feature a National Advisory Committee for Aeronautics (NACA) profile to help during the forward flying phase. Depending of the mission, and the related maximum take-off weight (MTOW), redundancy and maneuverability is guaranteed in all of the variants. The architecture of the fuselage, the thrust producing units, and the way they are linked to each other may be similar.

Illustratively, the thrust producing unit may be composed of two propelling mechanisms. The first propelling mechanism may include a main rotor that is located in the center. A motor may directly drive the main rotor. The main rotor may be ducted and deliver the main part of lift. The second propelling mechanism may include jet fans that are integrated all around the duct. The jet fans, which are sometimes also referred to as impellers, may be directly driven and deliver a part of the lift to ensure the maneuverability and tilting of the thrust producing unit. Redundancy may be ensured through the installation of more than one thrust producing unit.

By way of example, the duct of the main rotor may be composed of one main duct and a plurality of surrounding smaller ducts. The profiles of the main duct and the surrounding smaller ducts may be optimized to generate lift in hover and in forward flight.

Illustratively, the thrust producing units may be tilted to adapt to the best position in all flight phases, including the landing phase, the take-off phase, or the cruise phase.

The thrust producing units need no additional tilting mechanism. In fact, the impellers may take this role. For example, the rotor plane will pitch down when the rear impellers are accelerated compared to the front impellers.

The interface between the wings and the two propelling mechanisms remains simple. In particular, no air flow disturbance is transmitted between the two propelling mechanisms (i.e., between the main rotor and the jet fans).

Thus, the multirotor aircraft with one ore more thrust producing units that have a tilted ducted main rotor with integrated jet fans is able to fly safely. In particular, a multirotor aircraft with more than one thrust producing unit ensure a high level of redundancy.

The charge between the propellers and the on-boarded energy may be spread in an efficient way depending of the flight mode and using an efficient proportion of each one of the two propelling mechanisms (i.e., a ducted main rotor or integrated ducted jet fans).

Illustratively, the thrust producing units may enable a weight reduction compared to state-of-the-art thrust producing units due to its mix of compactness and efficiency and the benefit of the aerodynamic profiles of the ducts and possibly the wings as well as the usage of the jet fans as a tilting mechanism.

The usage of ducted main rotors reduces noise, protects passenger, and increases the lift efficiency of the thrust producing units. Furthermore, the multirotor aircraft may be simplified, because many interfaces between the thrust producing units and the wings may be omitted.

Furthermore, the aerodynamics of the thrust producing units is improved thanks to the profiles of the air ducts and the wings. Thus, the maximal flying speed may increase while drag loads on the thrust producing units during horizontal flight may decrease.

According to one aspect, the shrouding is ring-shaped, and the arc-shaped layout forms a ring segment.

According to one aspect, the ring segment encompasses at least 320° of a circle.

According to one aspect, the plurality of secondary rotor assemblies comprises at least six separate secondary rotor assemblies.

According to one aspect, each one of the plurality of secondary rotor assemblies is embodied as a jet fan.

According to one aspect, the shrouding comprises an inner shrouding wall and an outer shrouding wall, both of which are interconnected.

According to one aspect, the inner shrouding wall forms the main air duct.

According to one aspect, the plurality of secondary rotor assemblies is arranged between the inner shrouding wall and the outer shrouding wall.

According to one aspect, each one of the plurality of secondary rotor assemblies is electrically driven.

According to one aspect, the fuselage is adapted for transportation of passengers.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative multirotor aircraft with four exemplary thrust producing units in accordance with some embodiments,
- Figure 2 is a diagram of an illustrative multirotor aircraft with two exemplary thrust producing units in accordance with some embodiments,
- Figure 3 is a diagram of an illustrative multirotor aircraft with six exemplary thrust producing units in accordance with some embodiments,

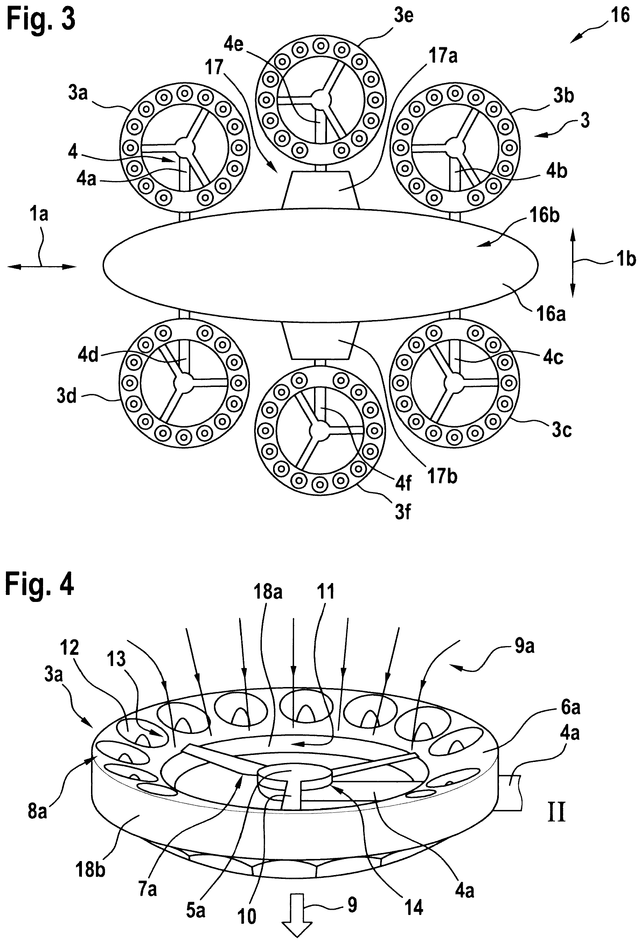

- Figure 3 is a diagram of an illustrative multirotor aircraft with six exemplary thrust producing units in accordance with some embodiments,
- Figure 4 is a diagram of an illustrative thrust producing unit showing the airflow through the main rotor in accordance with some embodiments,

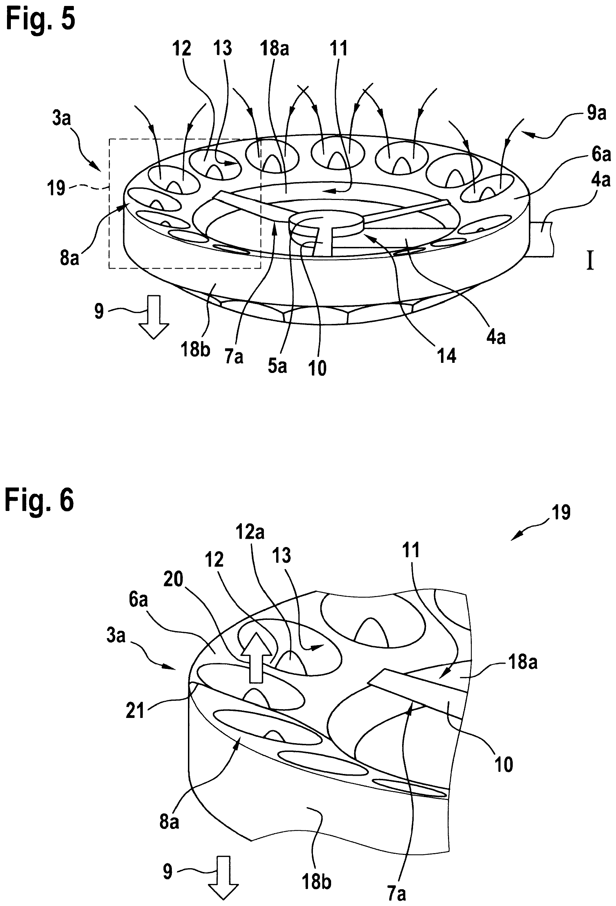

- Figure 5 is a diagram of an illustrative thrust producing unit showing the airflow through the secondary rotor assemblies in accordance with some embodiments,
- Figure 6 is a diagram of illustrative air ducts of an exemplary thrust producing unit in vertical flight in accordance with some embodiments,

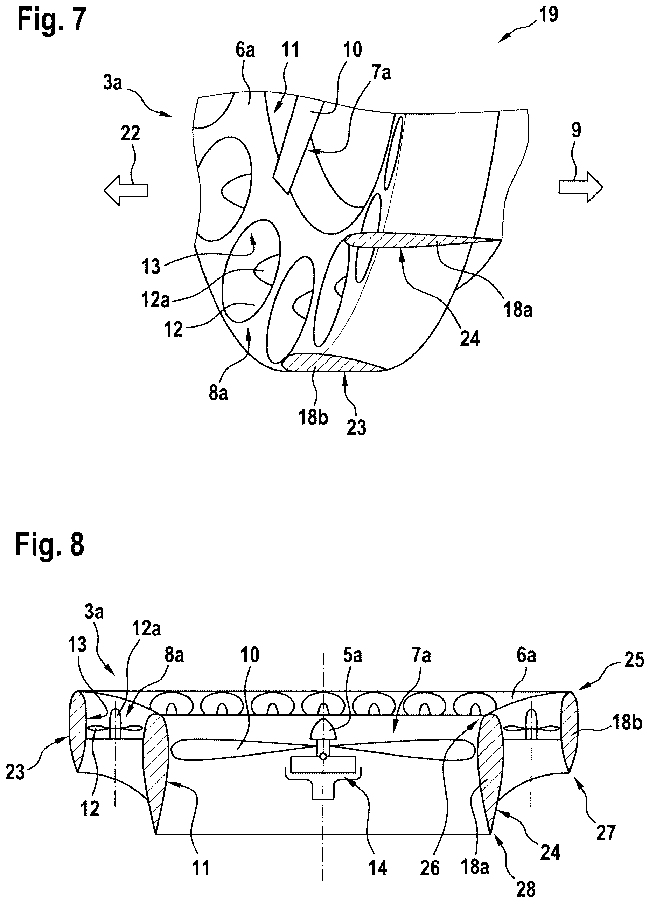

- Figure 7 is a diagram of illustrative air ducts of an exemplary thrust producing unit in horizontal flight in accordance with some embodiments, and
- Figure 8 shows a cut view of the illustrative thrust producing unit of Figure 5 in accordance with some embodiments.

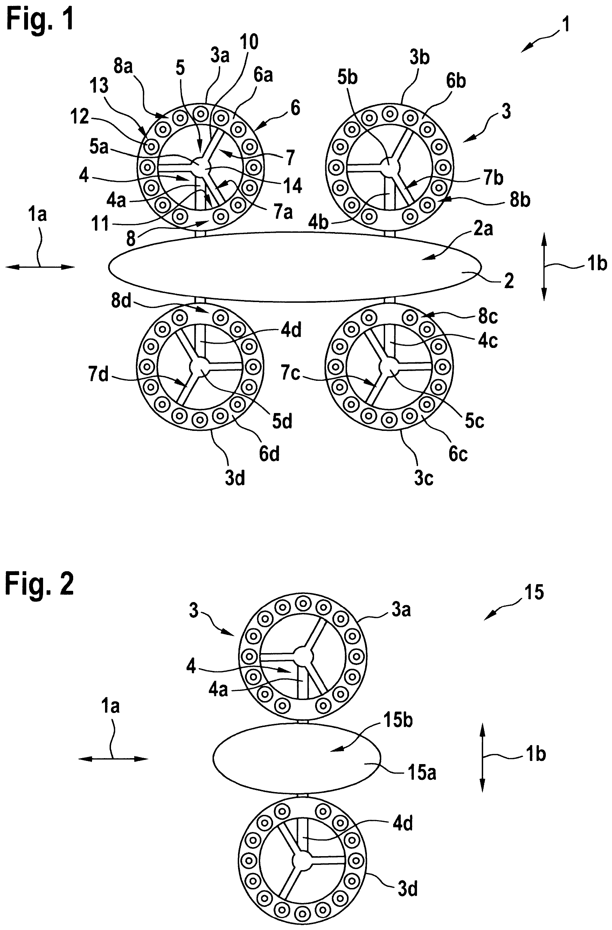

Figure 1 shows an exemplary multirotor aircraft 1. It should be noted that although the multirotor aircraft 1 is illustrated and described below with reference to a multirotor structure with multiple rotor assemblies, it could likewise be implemented as a multipropeller structure with multiple propeller assemblies or as a multipropeller and -rotor structure. More specifically, while rotors are generally fully articulated, propellers are generally not articulated at all. However, both can be used for generating thrust and, thus, for implementing the thrust producing units. Consequently, any reference to rotors or rotor structures in the present application should likewise be understood as a reference to propellers and propeller structures, so that the multirotor aircraft 1 can likewise be implemented as a multipropeller and/or multipropeller and -rotor aircraft.

Multirotor aircraft 1 may have an aircraft airframe 2. The aircraft airframe 2 defines a supporting structure that is also referred to hereinafter as the fuselage of the multirotor aircraft 1.

The fuselage 2 has an extension in longitudinal direction 1a and an extension in lateral direction 1b. Fuselage 2 may define an internal volume 2a that is at least adapted for transportation of passengers, so that the multirotor aircraft 1 as a whole is adapted for transportation of passengers. The internal volume 2a may be adapted for accommodating operational and electrical equipment, such as e.g. an energy storage system that is required for operation of the multirotor aircraft 1.

It should be noted that exemplary configurations of the internal volume 2a that are suitable for transportation of passengers, but also for accommodation of operational and electrical equipment, are readily available to the person skilled in the art and generally implemented to comply with applicable authority regulations and certification requirements regarding passenger transportation. Thus, as these configurations of the internal volume 2a as such are not part of the present invention, they are not described in detail for brevity and conciseness.

According to one aspect, the multirotor aircraft 1 comprises a plurality of thrust producing units 3. Illustratively, the plurality of thrust producing units 3 comprises at least two thrust producing units. As shown, multirotor aircraft 1 comprises four thrust producing units 3a, 3b, 3c, 3d. The thrust producing units 3a, 3b, 3c, 3d are embodied for producing thrust (e.g., thrust producing airstream direction 9 in Figures 4 and 5) in operation, such that the multirotor aircraft 1 is able to hover in the air as well as to fly in any forward or rearward direction.

As shown, the thrust producing units 3a, 3b, 3c, 3d are structurally connected to the fuselage 2. By way of example, the thrust producing units 3a, 3b, 3c, 3d are structurally connected to the fuselage 2 by means of a plurality of structural supports 4. More specifically, the thrust producing unit 3a is connected to the fuselage 2 via a structural support 4a, the thrust producing unit 3b via a structural support 4b, the thrust producing unit 3c via a structural support 4c, and the thrust producing unit 3d via a structural support 4d, wherein the structural supports 4a, 4b, 4c, 4d define the plurality of structural supports 4.

Illustratively, one or more of the thrust producing units 3a, 3b, 3c, 3d may be pivotable around the associated structural support 4a, 4b, 4c, 4d relative to fuselage 2.

If desired, at least one of the thrust producing units 3a, 3b, 3c, 3d comprises an associated shrouding in order to improve the underlying aerodynamics and to increase operational safety. By way of example, a plurality of shrouding units 6 is shown with four separate shroudings 6a, 6b, 6c, 6d. Illustratively, the shrouding 6a is associated with the thrust producing unit 3a, the shrouding 6b with the thrust producing unit 3b, the shrouding 6c with the thrust producing unit 3c, and the shrouding 6d with the thrust producing unit 3d. According to one aspect, the shroudings 6a, 6b, 6c, 6d have a complex geometry, such as e.g. described below with reference to Figures 7 and 8.

Furthermore, the shroudings 6a, 6b, 6c, 6d can be connected to the fuselage 2 together with the structural supports 4a, 4b, 4c, 4d, in order to reinforce the connection between the thrust producing units 3a, 3b, 3c, 3d and the fuselage 2. Alternatively, only the shroudings 6a, 6b, 6c, 6d can be connected to the fuselage 2.

According to one aspect, at least one and, if desired, each one of the thrust producing units 3a, 3b, 3c, 3d is equipped with at least one main rotor assembly. Illustratively, a main rotor assembly may include at least a main rotor 10 and a main rotor engine 14. If desired, each one of the thrust producing units 3a, 3b, 3c, 3d is equipped with at least two main rotor assemblies.

By way of example, the thrust producing unit 3a is equipped with one main rotor assembly 7a, the thrust producing unit 3b is equipped with one main rotor assembly 7b, the thrust producing unit 3c is equipped with one main rotor assembly 7c, and the thrust producing unit 3d is equipped with one main rotor assembly 7d. The main rotor assemblies 7a, 7b, 7c, 7d illustratively define a plurality of main rotor assemblies 7.

If desired, the plurality of main rotor assemblies 7 may be connected to the plurality of structural supports 4 by means of a plurality of gearbox fairings 5. Illustratively, main rotor assembly 7a is connected to structural support 4a by means of gearbox fairing 5a, main rotor assembly 7b is connected to structural support 4b by means of gearbox fairing 5b, main rotor assembly 7c is connected to structural support 4c by means of gearbox fairing 5c, and main rotor assembly 7d is connected to structural support 4d by means of gearbox fairing 5d.

The thrust producing units 3 have a plurality of secondary rotor assemblies 8. Illustratively, each secondary rotor assembly may include at least a secondary rotor 12 and a secondary rotor engine (e.g., secondary rotor engine 12a of Figure 6).

According to one aspect, at least some secondary rotor assemblies of the plurality of secondary rotor assemblies 8 may be embodied as a jet fan. If desired, each one of the plurality of secondary rotor assemblies 8 may be embodied as a jet fan.

According to one aspect, at least some secondary rotor assemblies of the plurality of secondary rotor assemblies 8 may be electrically driven. If desired, each one of the plurality of secondary rotor assemblies 8 may be electrically driven.

Illustratively, at least one and, if desired, each one of the thrust producing units 3a, 3b, 3c, 3d may be equipped with secondary rotor assemblies 8a, 8b, 8c, 8d, respectively, that define the plurality of secondary rotor assemblies 8. The plurality of secondary rotor assemblies 8 may include a predetermined number of separate secondary rotor assemblies 8a, 8b, 8c, 8d. For example, the plurality of secondary rotor assemblies 8 may include at least six separate secondary rotor assemblies 8a.

By way of example, the thrust producing unit 3a may be equipped with secondary rotor assemblies 8a, the thrust producing unit 3b may be equipped with secondary rotor assemblies 8b, the thrust producing unit 3c may be equipped with secondary rotor assemblies 8c, and the thrust producing unit 3d may be equipped with secondary rotor assemblies 8d.

As shown in Figure 1, each one of thrust producing units 3a, 3b, 3c, 3d includes 15 separate secondary rotor assemblies 8a, 8b, 8c, 8d, respectively. However, each one of thrust producing units 3a, 3b, 3c, 3d may include a different number of separate secondary rotor assemblies 8a, 8b, 8c, 8d, respectively.

As an example, thrust producing units 3a and 3d may each include a first number of separate secondary rotor assemblies 8a and 8d, respectively, while thrust producing units 3b and 3c each include a second number of separate secondary rotor assemblies 8b and 8c, respectively, whereby the first and second numbers are different. For example, the first number may be greater than or smaller than the second number.

If desired, first and/or second numbers may be greater than, equal to, or smaller than 15. For example, each one of thrust producing units 3a, 3b, 3c, 3d may include at least six separate secondary rotor assemblies 8a, 8b, 8c, 8d, respectively.

According to the invention, the main rotor assembly 7a, 7b, 7c, 7d of the respective thrust producing unit 3a, 3b, 3c, 3d is operable independent of the respective secondary rotor assemblies 8a, 8b, 8c, 8d of the respective thrust producing unit 3a, 3b, 3c, 3d. In fact, each one of the main rotor assembly 7a, 7b, 7c, 7d and the plurality of secondary rotor assemblies 8 is operable independently.

At least a first portion of the plurality of secondary rotor assemblies 8 is operable independent of a second portion of the plurality of secondary rotor assemblies 8. As such, a first portion of secondary rotor assemblies 8a is operable independent of a second portion of secondary rotor assemblies 8a. For example, a first half of secondary rotor assemblies 8a that is arranged in longitudinal direction 1a at the front of thrust producing unit 3a may produce no or a lesser airstream than a second half of secondary rotor assemblies 8a that is arranged in longitudinal direction 1a at the back of thrust producing unit 3a, thereby tilting thrust producing unit 3a relative to fuselage 2.

Illustratively, at least one shrouding of the plurality of shrouding units 6, and if desired, each shrouding of the plurality of shrouding units 6 (i.e., each shrouding of shroudings 6a, 6b, 6c, 6d in Figure 1) may include an inner shrouding wall and an outer shrouding wall (e.g., inner shrouding wall 18a and outer shrouding wall 18b of Figure 4). The inner shrouding wall may form main air duct 11.

The main air duct 11 is provided for interacting with the respective main rotor assembly of the plurality of main rotor assemblies 7. For example, a first main air duct 11 may interact with main rotor assembly 7a, a second main air duct 11 may interact with main rotor assembly 7b, a third main air duct 11 may interact with main rotor assembly 7c, and a fourth main air duct 11 may interact with main rotor assembly 7d.

Illustratively, the plurality of secondary rotor assemblies 8 may be arranged between the inner shrouding wall and the outer shrouding wall. As an example, a plurality of secondary air ducts 13 may be provided between the inner shrouding wall and the outer shrouding wall.

The plurality of secondary air ducts 13 is provided for interacting with the plurality of secondary rotor assemblies 8.

According to the invention, the plurality of secondary air ducts 13 are peripherally arranged around the main air duct 11 in an arc-shaped layout.

By way of example, at least one shrouding of the plurality of shrouding units 6, and if desired, each shrouding of the plurality of shrouding units 6 (i.e., each shrouding of shroudings 6a, 6b, 6c, 6d in Figure 1) may be ring-shaped, and the arc-shaped layout of the shrouding may form a ring segment. If desired, the ring segment encompasses a predetermined angle of a circle. For example, the ring segment may encompass at least 320° of a circle.

Figure 2 is a diagram of an illustrative multirotor aircraft with two exemplary thrust producing units in accordance with some embodiments.

Multirotor aircraft 15 may have an associated aircraft airframe 15a. The aircraft airframe 15a defines a supporting structure that is also referred to hereinafter as the fuselage of the multirotor aircraft 15.

The fuselage 15a has an extension in longitudinal direction 1a and an extension in lateral direction 1b. Fuselage 15a may define an internal volume 15b that is at least adapted for transportation of passengers, so that the multirotor aircraft 15 as a whole is adapted for transportation of passengers. The internal volume 15b is preferably further adapted for accommodating operational and electrical equipment, such as e.g. an energy storage system that is required for operation of the multirotor aircraft 15.

According to one aspect, the multirotor aircraft 15 comprises a plurality of thrust producing units 3. Illustratively, the plurality of thrust producing units 3 comprises at least two thrust producing units. As shown, multirotor aircraft 1 comprises two thrust producing units 3a, 3d. The thrust producing units 3a, 3d are embodied for producing thrust (e.g., thrust producing airstream direction 9 in Figures 4 and 5) in operation, such that the multirotor aircraft 15 is able to hover in the air as well as to fly in any forward or rearward direction.

As shown, the thrust producing units 3a, 3d are structurally connected to the fuselage 15a. By way of example, the thrust producing units 3a, 3d are structurally connected to the fuselage 15 by means of a plurality of structural supports 4. More specifically, the thrust producing unit 3a is connected to the fuselage 15 via a structural support 4a and the thrust producing unit 3d via a structural support 4d, wherein the structural supports 4a, 4d define the plurality of structural supports 4.

Illustratively, one or more of the thrust producing units 3a, 3d may be pivotable around the associated structural support 4a, 4d relative to fuselage 15.

Figure 3 is a diagram of an illustrative multirotor aircraft with six exemplary thrust producing units in accordance with some embodiments.

Multirotor aircraft 16 may have an associated aircraft airframe 16a. The aircraft airframe 16a defines a supporting structure that is also referred to hereinafter as the fuselage of the multirotor aircraft 16.

The fuselage 16a has an extension in longitudinal direction 1a and an extension in lateral direction 1b. Fuselage 16a may define an internal volume 16b that is at least adapted for transportation of passengers, so that the multirotor aircraft 16 as a whole is adapted for transportation of passengers. The internal volume 16b is preferably further adapted for accommodating operational and electrical equipment, such as e.g. an energy storage system that is required for operation of the multirotor aircraft 16.

According to one aspect, the multirotor aircraft 16 comprises a plurality of thrust producing units 3. Illustratively, the plurality of thrust producing units 3 comprises at least two thrust producing units. As shown, multirotor aircraft 1 comprises six thrust producing units 3a, 3b, 3c 3d, 3e, 3f. The thrust producing units 3a, 3b, 3c, 3d, 3e, 3f are embodied for producing thrust (e.g., thrust producing airstream direction 9 in Figure 4) in operation, such that the multirotor aircraft 16 is able to hover in the air as well as to fly in any forward or rearward direction.

As shown, the thrust producing units 3a, 3b, 3c, 3d, 3e, 3f are structurally connected to the fuselage 16a. By way of example, the thrust producing units 3a, 3b, 3c, 3d are structurally connected to the fuselage 16 by means of a plurality of structural supports 4.

More specifically, the thrust producing unit 3a is connected to the fuselage 16 via a structural support 4a, the thrust producing unit 3b is connected to the fuselage 16 via a structural support 4b, the thrust producing unit 3c is connected to the fuselage 16 via a structural support 4c, and the thrust producing unit 3d via a structural support 4d, wherein the structural supports 4a, 4b, 4c, 4d define the plurality of structural supports 4.

By way of example, the thrust producing units 3e, 3f are connected to the fuselage 16 via wings 17. More specifically, the thrust producing unit 3e is connected to the fuselage 16 via a portside wing 17a, and the thrust producing unit 3f is connected to the fuselage 16 via a starboard side wing 17b.

Illustratively, one or more of the thrust producing units 3a, 3b, 3c, 3d, 3e, 3f may be pivotable around the associated structural support 4a, 4b, 4c, 4d, the associated portside wing 17a, or the associated starboard side wing 17b relative to fuselage 16. If desired, pairs of thrust producing units on opposite sides of longitudinal axis 1a through the fuselage 16 may be pivotable around the associated structural support and/or the associated wings while others are not. As an example, thrust producing units 3e and 3f may be pivotable around the associated portside wing 17a and the associated starboard side wing 17b, respectively, while thrust producing units 3a, 3b, 3c, 3d are not pivotable. As another example, thrust producing units 3a, 3b, 3c, 3d may be pivotable around the associated structural support 4a, 4b, 4c, 4d, respectively, while thrust producing units 3e and 3f are not pivotable.

Figures 4 and 5 are diagrams of an illustrative thrust producing unit. The thrust producing unit, which is illustratively shown as thrust producing unit 3a, may be connected to the fuselage of a multirotor aircraft via structural support 4a. If desired, thrust producing unit 3a may be pivotable or tilted around the associated structural support 4a.

Illustratively, thrust producing unit 3a may include shrouding 6a. Shrouding 6a may be connected to the fuselage of the multirotor aircraft together with the structural support 4a in order to reinforce the connection between the thrust producing units 3a and the fuselage.

As shown in Figures 4 and 5, thrust producing unit 3a may be equipped with main rotor assembly 7a. Main rotor assembly 7a may include at least a main rotor 10 and a main rotor engine 14. If desired, main rotor assembly 7a may be connected to structural support 4a by means of gearbox fairing 5a.

Illustratively, thrust producing unit 3a may be equipped with secondary rotor assemblies 8a. At least some of secondary rotor assemblies 8a may include at least a secondary rotor 12 and a secondary rotor engine (e.g., secondary rotor engine 12a of Figure 6).

If desired, at least some of secondary rotor assemblies 8a may be embodied as a jet fan. According to one aspect, at least some of secondary rotor assemblies 8a may be electrically driven.

Illustratively, the main rotor assembly 7a of thrust producing unit 3a may be operable independent of the secondary rotor assemblies 8a. If desired, at least some of the secondary rotor assemblies 8a may be operable independent of each other. In some embodiments, the main rotor assembly 7a and each one of the secondary rotor assemblies 8a may be operable independent of each other.

By way of example, shrouding 6a may include an inner shrouding wall 18a and an outer shrouding wall 18b. The inner shrouding wall 18a may form main air duct 11. The main air duct 11 may be provided for interacting with main rotor assembly 7a.

Illustratively, secondary rotor assemblies 8a may be arranged between the inner shrouding wall 18a and the outer shrouding wall 18b. As an example, a plurality of secondary air ducts 13 may be provided between inner shrouding wall 18a and outer shrouding wall 18b.

The plurality of secondary air ducts 13 may be provided for interacting with the plurality of secondary rotor assemblies 8a. If desired, the plurality of secondary air ducts 13 may be peripherally arranged around the main air duct 11 in an arc-shaped layout.

By way of example, shrouding 6a may be ring-shaped. If desired, the arc-shaped layout of shrouding 6a may form a ring segment. Illustratively, the ring segment encompasses a predetermined angle of a circle. For example, the ring segment may encompass at least 320° of a circle.

Inner shrouding wall 18a and/or outer shrouding wall 18b may have a circular profile. If desired, inner shrouding wall 18a and/or outer shrouding wall 18b may have a profile that is non-circular. For example, inner shrouding wall 18a and/or outer shrouding wall 18b may have an elliptical or oval profile.

Inner shrouding wall 18a and/or outer shrouding wall 18b may form a cylinder, a cone, or a cylinder in some parts and a cone in other parts. Inner shrouding wall 18a and outer shrouding wall 18b may have a different height. If desired, inner shrouding wall 18a and outer shrouding wall 18b may have the same height.

Figure 4 further shows the incoming airstream 9a into main rotor assembly 7a and the thrust producing airstream direction out of main rotor assembly 7a, whereas Figure 5 shows the incoming airstream into secondary rotor assemblies 8a and the thrust producing airstream out of secondary rotor assemblies 8a.

Figure 5 also shows an enlarged section 19 that is shown in more detail in Figures 6 and 7. Figure 6 shows exemplary thrust producing unit 3a in vertical flight or hover. Thrust producing airstream direction 9 is downward such that hover direction 20 is upward.

Illustrative thrust producing unit 3a may have an enhanced hover profile 21 between inner shrouding wall 18a and outer shrouding wall 18b. For example, the enhanced hover profile 21 may be aerodynamically advantageous for directing the incoming airstream (e.g., incoming airstream 9a of Figure 5). Providing an aerodynamically advantageous profile is well known to the person skilled in the art and therefore not described in detail for brevity and conciseness.

Figure 7 shows exemplary thrust producing unit 3a in horizontal flight or forward flight. Thrust producing airstream direction 9 is backward such that flight direction 22 is forward.

Illustrative thrust producing unit 3a may have enhanced forward flight profiles 23, 24. Forward flight profile 23 may be arranged between outer shrouding wall 18b and the inside wall of secondary air ducts 13. Forward flight profile 24 may be arranged between inner shrouding wall 18a and the inside wall of secondary air ducts 13.

For example, the forward flight profiles 23, 24 may be aerodynamically advantageous for directing the incoming airstream (e.g., incoming airstream 9a of Figure 5). If desired, forward flight profile 23 and/or forward flight profile 24 may feature a National Advisory Committee for Aeronautics (NACA) profile to help during the forward flying phase.

Figure 8 shows a cut view of the illustrative thrust producing unit of Figure 5 in accordance with some embodiments. The thrust producing unit, which is illustratively shown as thrust producing unit 3a, may be equipped with main rotor assembly 7a. Main rotor assembly 7a may include at least a main rotor 10 and a main rotor engine 14. If desired, main rotor assembly 7a may be connected to a structural support by means of gearbox fairing 5a.

Illustratively, thrust producing unit 3a may be equipped with secondary rotor assemblies 8a. At least some of secondary rotor assemblies 8a may include at least a secondary rotor 12 and a secondary rotor engine 12a.

If desired, thrust producing unit 3a may include shrouding 6a. By way of example, shrouding 6a may include an inner shrouding wall 18a and an outer shrouding wall 18b. The inner shrouding wall 18a may form main air duct 11. The main air duct 11 may be provided for interacting with main rotor assembly 7a.

Illustratively, secondary rotor assemblies 8a may be arranged between the inner shrouding wall 18a and the outer shrouding wall 18b. As an example, a plurality of secondary air ducts 13 may be provided between inner shrouding wall 18a and outer shrouding wall 18b.

The plurality of secondary air ducts 13 may be provided for interacting with the plurality of secondary rotor assemblies 8a. If desired, the plurality of secondary air ducts 13 may be peripherally arranged around the main air duct 11 in an arc-shaped layout.

By way of example, shrouding 6a may be ring-shaped. If desired, the arc-shaped layout of shrouding 6a may form a ring segment. Illustratively, the ring segment encompasses a predetermined angle of a circle. For example, the ring segment may encompass at least 320° of a circle.

Inner shrouding wall 18a and/or outer shrouding wall 18b may have a circular profile. If desired, inner shrouding wall 18a and/or outer shrouding wall 18b may have a profile that is non-circular. For example, inner shrouding wall 18a and/or outer shrouding wall 18b may have an elliptical or oval profile.

Illustratively, the inner shrouding wall 18a and/or the outer shrouding wall 18b may be provided with an aerodynamic profile that is adapted to forward flight conditions. If desired, the shrouding 6a comprises an aerodynamic profile which is adapted to hover conditions.

Inner shrouding wall 18a and/or outer shrouding wall 18b may form a cylinder, a cone, or a cylinder in some parts and a cone in other parts. Inner shrouding wall 18a and outer shrouding wall 18b may have a different height. If desired, inner shrouding wall 18a and outer shrouding wall 18b may have the same height.

Illustrative thrust producing unit 3a may have enhanced forward flight profiles 23, 24. Forward flight profile 23 may be arranged between outer shrouding wall 18b and the inside wall of secondary air ducts 13. Forward flight profile 24 may be arranged between inner shrouding wall 18a and the inside wall of secondary air ducts 13.

For example, the forward flight profiles 23, 24 may be aerodynamically advantageous for directing the incoming airstream (e.g., incoming airstream 9a of Figure 5). If desired, forward flight profile 23 and/or forward flight profile 24 may feature a National Advisory Committee for Aeronautics (NACA) profile to help during the forward flying phase.

Illustratively, forward flight profiles 23 and 24 may be identical. If desired, forward flight profiles 23 and 24 may be different from each other. As an example, forward flight profile 23 may have a different height than forward flight profile 24 (i.e., the distance between upper end 25 and lower end 27 of forward flight profile 23 may be different than the distance between upper end 26 and lower end 28 of forward flight profile 24). As another example, forward flight profile 23 may have a different width than forward flight profile 24. As yet another example, forward flight profile 23 may have a different shape or cross section than forward flight profile 24.

As shown in Figure 8, the upper and lower ends 25, 27 of forward flight profile 23 are arranged above the respective upper and lower ends 26, 28 of forward flight profile 24 relative to main rotor 10. If desired, the upper end 25 and/or the lower end 27 of forward flight profile 23 may be arranged below the upper end 26 and/or the lower end 28 of forward flight profile 24 relative to main rotor 10.

It should be noted that modifications of the above described aspects of the present embodiments are also within the common knowledge of the person skilled in the art and, thus, also considered as being part of the present invention.

For instance, the thrust producing units 3a, 3b, 3c, 3d of Figure 1, the thrust producing units 3a, 3d of Figure 2, or the thrust producing units 3a, 3b, 3c, 3d, 3e, 3f are shown to have the same size of main rotor assemblies 7, the same number and size of secondary rotor assemblies 8, the same size of shrouding units 6, etc. However, as an example, the thrust producing units may all be different with respect to the size of main rotor assemblies 7, the number and size of secondary rotor assemblies 8, the size of shrouding units 6, etc. As another example, the thrust producing units may be pairwise different from each other. For example, thrust producing units 3a and 3d of Figures 1 and 3 may be identical, and thrust producing units 3b and 3c of Figures 1 and 3 may be identical, while thrust producing units 3a and 3d are different with respect to the size of main rotor assemblies 7, the number and size of secondary rotor assemblies 8, the size of shrouding units 6, etc. than thrust producing units 3b, 3c.

### Reference List

- 1: Multirotor aircraft
- 1a: Aircraft longitudinal direction resp. roll axis
- 1b: Aircraft lateral direction resp. pitch axis
- 2: Aircraft airframe
- 2a: Aircraft airframe internal volume
- 3: Thrust producing units
- 3a, 3b, 3c, 3d, 3e, 3f: Thrust producing unit
- 4: Thrust producing units structural supports
- 4a, 4b, 4c, 4d, 4e, 4f: Thrust producing unit structural support
- 5: Gearbox fairings
- 5a, 5b, 5c, 5d: Gearbox fairing
- 6: Shrouding units
- 6a, 6b, 6c, 6d: Shrouding
- 7: Main rotor assemblies
- 7a, 7b, 7c, 7d: Main rotor assembly
- 8: Secondary rotor assemblies
- 8a, 8b, 8c, 8d: Secondary rotor assembly
- 9: Thrust producing airstream direction
- 9a: Incoming airstream
- 10: Main rotor
- 11: Main rotor air duct
- 12: Secondary rotor
- 12a: Secondary rotor engine
- 13: Secondary rotor air duct
- 14: Main rotor engine and/or engine fitting
- 15: First multirotor aircraft variant
- 15a: Aircraft airframe
- 15b: Aircraft airframe internal volume
- 16: Second multirotor aircraft variant
- 16a: Aircraft airframe
- 16b: Aircraft airframe internal volume
- 17: Wings
- 17a: Portside wing
- 17b: Starboard side wing
- 18a: Inner shrouding wall
- 18b: Outer shrouding wall
- 19: Enlarged section
- 20: Hover direction
- 21: Enhanced hover profile
- 22: Forward flight direction
- 23, 24: Enhanced forward flight profiles
- 25, 26: Upper end
- 27, 28: Lower end

## Claims

1. A multirotor aircraft (1) that is adapted for vertical take-off and landing, comprising a fuselage (2) and at least one thrust producing unit (3a) that is connected to the fuselage (2) via an associated structural support (4a) and pivotable around the associated structural support (4a) relative to the fuselage (2), wherein the at least one thrust producing unit (3a) comprises at least one main rotor assembly (7a), a plurality of secondary rotor assemblies (8), and a shrouding (6a) that forms a main air duct (11) and a plurality of secondary air ducts (13), the main air duct (11) being provided for interacting with the at least one main rotor assembly (7a) and the plurality of secondary air ducts (13) being provided for interacting with the plurality of secondary rotor assemblies (8), wherein the plurality of secondary air ducts (13) is peripherally arranged around the main air duct (11) in an arc-shaped layout, wherein the at least one main rotor assembly (7a) and the plurality of secondary rotor assemblies (8) are operable independent of each other, wherein the plurality of secondary rotor assemblies (8) is configured to implement a tilting mechanism adapted for pivoting the at least one thrust producing unit (3a) around the associated structural support (4a) relative to the fuselage (2), and wherein at least a first portion of the plurality of secondary rotor assemblies (8) is operable independent of a second portion of the plurality of secondary rotor assemblies (8) to implement the tilting mechanism.

2. The multirotor aircraft (1) of claim 1,
wherein the shrouding (6a) is ring-shaped, and wherein the arc-shaped layout forms a ring segment.

3. The multirotor aircraft (1) of claim 2,
wherein the ring segment encompasses at least 320° of a circle.

4. The multirotor aircraft (1) of any one of the preceding claims,
wherein the plurality of secondary rotor assemblies (8) comprises at least six separate secondary rotor assemblies (8a).

5. The multirotor aircraft (1) of any one of the preceding claims,
wherein each one of the plurality of secondary rotor assemblies (8) is embodied as a jet fan.

6. The multirotor aircraft (1) of any one of the preceding claims,
wherein the shrouding (6a) comprises an inner shrouding wall (18a) and an outer shrouding wall (18b), both of which are interconnected.

7. The multirotor aircraft (1) of claim 6,
wherein the inner shrouding wall (18a) forms the main air duct (11).

8. The multirotor aircraft (1) of claim 7,
wherein the plurality of secondary rotor assemblies (8) is arranged between the inner shrouding wall (18a) and the outer shrouding wall (18b).

9. The multirotor aircraft (1) of any one of the preceding claims,
wherein each one of the plurality of secondary rotor assemblies (8) is electrically driven.

10. The multirotor aircraft (1) of any one of the preceding claims,
wherein the fuselage (2) is adapted for transportation of passengers.

## Patentansprüche

1. Multirotorflugzeug (1), das für vertikales Starten und Landen eingerichtet ist, mit einem Rumpf (2) und mindestens einer schuberzeugenden Einheit (3a), die mit dem Rumpf (2) über einen zugeordneten Strukturträger (4a) verbunden ist und um den zugeordneten Strukturträger (4a) relativ zum Rumpf (2) schwenkbar ist, wobei die mindestens eine schuberzeugende Einheit (3a) mindestens eine Hauptrotoranordnung (7a), eine Mehrzahl von Sekundärrotoranordnungen (8) und eine Ummantelung (6a) umfasst, die einen Hauptluftkanal (11) und eine Mehrzahl von Sekundärluftkanälen (13) bildet, wobei der Hauptluftkanal (11) zum Zusammenwirken mit der mindestens einen Hauptrotoranordnung (7a) vorgesehen ist und die Mehrzahl von Sekundärluftkanälen (13) zum Zusammenwirken mit der Mehrzahl von Sekundärrotoranordnungen (8) vorgesehen ist, wobei die Mehrzahl von Sekundärluftkanälen (13) peripher um den Hauptluftkanal (11) in einer bogenförmigen Anordnung angeordnet ist, wobei die mindestens eine Hauptrotoranordnung (7a) und die Mehrzahl von Sekundärrotoranordnungen (8) unabhängig voneinander betreibbar sind, wobei die Mehrzahl von Sekundärrotoranordnungen (8) konfiguriert ist, um einen Kippmechanismus zu implementieren, der zum Schwenken der mindestens einen Schuberzeugungseinheit (3a) um den zugeordneten Strukturträger (4a) relativ zu dem Rumpf (2) eingerichtet ist, und wobei mindestens ein erster Teil der Mehrzahl von Sekundärrotoranordnungen (8) unabhängig von einem zweiten Teil der Mehrzahl von Sekundärrotoranordnungen (8) betreibbar ist, um den Kippmechanismus zu implementieren.

2. Multirotorflugzeug (1) nach Anspruch 1,
bei dem die Ummantelung (6a) ringförmig ist, und bei dem die bogenförmige Anordnung ein Ringsegment bildet.

3. Multirotorflugzeug (1) nach Anspruch 2,
bei dem das Ringsegment mindestens 320° eines Kreises umfasst.

4. Multirotorflugzeug (1) nach einem der vorhergehenden Ansprüche,
bei dem die Mehrzahl von Sekundärrotoranordnungen (8) mindestens sechs separate Sekundärrotoranordnungen (8a) umfasst.

5. Multirotorflugzeug (1) nach einem der vorhergehenden Ansprüche,
bei dem jede der Mehrzahl von Sekundärrotoranordnungen (8) als Strahlgebläse ausgebildet ist.

6. Multirotorflugzeug (1) nach einem der vorhergehenden Ansprüche,
bei dem die Ummantelung (6a) eine innere Ummantelungswand (18a) und eine äußere Ummantelungswand (18b) umfasst, die beide miteinander verbunden sind.

7. Multirotorflugzeug (1) nach Anspruch 6,
bei dem die innere Ummantelungswand (18a) den Hauptluftkanal (11) bildet.

8. Multirotorflugzeug (1) nach Anspruch 7,
bei dem die Mehrzahl von Sekundärrotoranordnungen (8) zwischen der inneren Ummantelungswand (18a) und der äußeren Ummantelungswand (18b) angeordnet ist.

9. Multirotorflugzeug (1) nach einem der vorhergehenden Ansprüche,
bei dem jede der Mehrzahl von Sekundärrotoranordnungen (8) elektrisch angetrieben ist.

10. Multirotorflugzeug (1) nach einem der vorhergehenden Ansprüche,
bei dem der Rumpf (2) für den Transport von Passagieren eingerichtet ist.

## Revendications

1. Aéronef multirotor (1) configuré pour décollages et atterrissages verticaux, comprenant un fuselage (2) et au moins une unité de production de poussée (3a) qui est raccordée au fuselage (2) via un support structurel (4a) associé et apte au pivotement autour du support structurel (4a) associé par rapport au fuselage (2), dans lequel ladite au moins une unité de production de poussée (3a) comprend au moins un ensemble à rotor principal (7a), une pluralité d'ensembles à rotor secondaires (8), et un carénage (6a) qui forme un conduit d'air principal (11) et une pluralité de conduits d'air secondaires (13), le conduit d'air principal (11) étant configuré pour interagir avec ledit au moins un ensemble à rotor principal (7a) et la pluralité de conduits d'air secondaires (13) étant prévu pour interagir avec la pluralité d'ensembles à rotor secondaires (8), dans lequel la pluralité de conduits d'air secondaires (13) est agencée de façon périphérique autour du conduit d'air principal (11) suivant une disposition en arc de cercle, dans lequel ledit au moins un ensemble à rotor principal (7a) et la pluralité d'ensembles à rotor secondaires (8) sont configurés pour fonctionner de façon indépendante l'un de l'autre, dans lequel la pluralité d'ensembles à rotor secondaires (8) est configurée pour mettre en oeuvre un mécanisme de basculement apte à provoquer le pivotement de ladite au moins une unité de production de poussée (3a) autour du support structurel (4a) associé par rapport au fuselage (2), et dans lequel au moins une première partie de la pluralité d'ensembles à rotor secondaires (8) est apte à fonctionner indépendamment d'une seconde partie de la pluralité d'ensembles à rotor secondaires (8) pour mettre en oeuvre le mécanisme de basculement.

2. Aéronef multirotor (1) selon la revendication 1,
dans lequel le carénage (6a) est en forme d'anneau, et dans lequel la disposition en arc de cercle prend la forme d'un segment d'anneau.

3. Aéronef multirotor (1) selon la revendication 2,
dans lequel le segment d'anneau décrit un arc de cercle d'au moins 320°.

4. Aéronef multirotor (1) selon l'une quelconque des revendications précédentes,
dans lequel la pluralité d'ensembles à rotor secondaires (8) comprend au moins six ensembles à rotor secondaires (8a) distincts.

5. Aéronef multirotor (1) selon l'une quelconque des revendications précédentes,
dans lequel chacun parmi la pluralité d'ensembles à rotor secondaires (8) est réalisé sous forme de soufflante à réaction.

6. Aéronef multirotor (1) selon l'une quelconque des revendications précédentes,
dans lequel le carénage (6a) comprend une paroi de carénage intérieure (18a) et une paroi de carénage extérieure (18b), chacune des deux étant raccordée entre elles.

7. Aéronef multirotor (1) selon la revendication 6,
dans lequel la paroi de carénage intérieure (18a) forme le conduit d'air principal (11).

8. Aéronef multirotor (1) selon la revendication 7,
dans lequel la pluralité d'ensembles à rotor secondaires (8) est aménagée entre la paroi de carénage intérieure (18a) et la paroi de carénage extérieure (18b).

9. Aéronef multirotor (1) selon l'une quelconque des revendications précédentes,
dans lequel chacun parmi la pluralité d'ensembles à rotor secondaires (8) est entraîné de façon électrique.

10. Aéronef multirotor (1) selon l'une quelconque des revendications précédentes,
dans lequel le fuselage (2) est configuré pour le transport de passagers.
